# EUROPEAN PATENT SPECIFICATION

(11) **EP 2 504 190 B1**
(45) Date of publication and mention of the grant of the patent: **12.03.2014**
(21) Application number: 10793024.0
(22) Date of filing: 26.11.2010
(51) Int. Cl.: B60L 5/42, B60L 11/18, B60M 7/00, H02J 7/00

(54) **ELECTRIC VEHICLE CHARGING STATION AND CHARGE RECEIVING ARRANGEMENT FOR A VEHICLE**
LADESTATION UND VORRICHTUNG ZUR AUFNAHME DER LADUNG FÜR EIN ELEKTROFAHRZEUG
STATION DE CHARGE DE VÉHICULE ÉLECTRIQUE ET AGENCEMENT DE RÉCEPTION DE CHARGE POUR UN VÉHICULE

(30) Priority: 26.11.2009 GB 0920726
(43) Date of publication of application: 03.10.2012
(73) Proprietor: Sylvan Ascent Inc, Taos New, Mexico 87571 (US)
(72) Inventor: BEDELL, Roger, E-18190 Granada (ES)
(74) Representative: Games, Robert Harland
(86) International application number: PCT/GB2010/051978
(87) International publication number: WO 2011/064596

(56) References cited:
- EP-A1- 1 997 668
- CN-A- 1 557 649
- CN-A- 101 580 024
- US-A- 4 158 802

## Description

The present invention relates to an electric vehicle charging station for charging an energy storage device of a vehicle and particularly, but not exclusively, for charging the batteries of a passenger vehicle such as a bus, trolley-bus or tram. According to a further aspect, the invention relates to a charge receiving arrangement for a vehicle, which can operate with a vehicle charging station.

### BACKGROUND TO THE INVENTION

At present, vehicles, such as electric vehicles have energy storage devices, for example, batteries, or super-capacitors which are recharged periodically by way of charging stations that the vehicle travels to so it can be hooked or connected to a power source such as the mains electricity supply. Some vehicles may operate using an electro-mechanical device such as an energy storage flywheel and again, the vehicle travels to a charging station and is attached to the charging station so that the energy storage device is re-charged from an electrical supply. Vehicles that use energy storage devices include, for example, trolley-buses or trams, which have a spring loaded electrical connection mechanism called a pantograph on the roof of the vehicle. The pantograph can be lifted up and extended so that the pantograph comes into contact with and is held in contact with an electrical power supply. Once the energy storage device is charged, the pantograph is lowered, contact with the electrical supply line is broken and then the driver can move off.

A known device is described in US 3955657 which uses a single pantograph on the roof of a vehicle while the other contact point for charging is a metal plate in a road. The fact that the metal plate is positioned in a road means that the plate could be contaminated by dirt or oil, which can reduce the effectiveness of charging because of poor electrical contact. Further, the fact that the plate is embedded in the road means that there are difficulties in operation if the road needs to be resurfaced because the plate will need to be removed, which means that the charging station would not be operational for a period of time.

US 5651434 describes a charging station which has parallel arms which are carried by a rotatable part of a pylon so that the charging connectors can be swung over into position relative to a vehicle to facilitate charging when the vehicle is in place.

US 4158802 discusses a system which has a pair of spring loaded electrodes that come down from an overhead supply and connect with connectors on the vehicle. The electrodes are in a parallel arrangement, which means that the driver has to carefully position the vehicle in relation to the electrodes so there is contact between the power supply and the vehicle.

CN101580024 discloses a charging station having two elongate conductors, disposed substantially vertically one above the other. Also disclosed is a charge receiving arrangement comprising of two parallel charge receiving members mounted to the roof of a vehicle.

The use of parallel lines for electrical charging has disadvantages in that it is necessary to carefully align a vehicle with the power source in order to connect to the power supply, which can be time consuming and relies on the skill of the driver aligning the vehicle with the power supply. Further, devices that have many moving parts can be prone to wear or vandalism, which again causes operational difficulties.

It is an object of the invention to provide a system where a vehicle energy storage system can be charged efficiently and easily by providing an arrangement where a driver can easily position the vehicle in relation to connectors, because a maximum contact area is provided for connection with a charging supply. Further, the system is robust in that there are minimal moving parts, which could wear or be vandalised and also the invention provides for a safe way of charging a vehicle and additional safety measures when not charging.

### SUMMARY OF THE INVENTION

According to a first aspect of the present invention, as set forth in claim 1, there is provided a vehicle charging station (2) comprising at least one pair of conducting elements (5, 6) for connecting with a pair of charge receiving members (14a, 15a) on a vehicle, the elements of the pair being insulated from one another, support means (3, 4) for said conducting elements (5, 6) which holds said conducting elements (5, 6) in position relative to a vehicle which is to receive a charge, in use, the conducting elements (5, 6) being substantially in line with the longitudinal axis of the vehicle, when the vehicle is in a charging position relative to the support (3, 4), *characterized **in that*** the conducting elements (5, 6) of the at least one pair are arranged with their longitudinal axes in axial alignment one behind the other.

Advantageously, the positioning of the conducting elements provides a large stopping target for a vehicle.

The conducting elements may be arranged on the support means such that the conducting elements can connect with charge receiving members on a roof of the vehicle. However, should the vehicle have charge receiving members on another position on the vehicle, for example the side of the vehicle, the conducting elements can be repositioned on the support, for example the support may have movable arms that allow the conducting elements to be lowered or swung into a position that is in proximity to the charge receiving members.

The elements of the pair may be separated from one another by an insulator. The insulator may be an insulating element made of non conducting material or it may be provided in the form of an air gap.

Further, each one of the elements of the pair may be held on a separate support. However, it is envisaged that a single support could be provided with two arms that hold each of the conducting elements and such an arrangement is useful if there is a restricted space for positioning the support. Alternatively, there may be a single support that holds both conducting elements using a single arm connected to the centre of both conducting elements and in such a situation, the arm acts as an insulator between the two conducting elements. The conducting elements are isolated from the supports. It is possible that there may be a row of supports, each holding a pair of charging elements that could charge multiple sets of batteries, for example if a vehicle has more than one battery that needs to be charged.

In a preferred arrangement each of the conducting elements is associated with a controller. The controller is in communication with a switch, which is operable so that the conducting elements can only carry current during charging for safety. The conducting elements are in communication with a charging power source by power-lines/wires.

Preferably, one or both of the conducting elements of the pair of conducting elements includes a sensor to test the contact between the conducting elements and the charge receiving members on the vehicle, preferably before charging commences. Testing the degree of electrical contact provides a safety feature to ensure that there is safe and efficient charging of the vehicle, with no risk of current leakage or overheating.

It is envisaged that the vehicle charging station includes a control arrangement to monitor the level of charge and the rate of charging. This provides a feature where the condition of the battery can be monitored, for example if it is necessary to repeatedly charge a battery, this may indicate that the battery may need to be changed or serviced.

Preferably there is a current monitor that can measure and/or monitor the amount of current passing from the conducting elements to the charge receiving elements and there may also be a voltage monitor that can measure/monitor the drop in voltage from the conducting elements to the charge receiving elements. In addition or alternatively there may also be temperature monitors in the conducting elements and/or the receiving elements to monitor and/or measure the amount of heat being generated at the junction between the conducting and receiving members to ensure there is no overheating in these areas and this is an additional safety feature to ensure safe charging.

The vehicle charging station may also have the facility to record data about the vehicle charging station itself or a particular vehicle and transmit this to a separate database so the condition of a fleet of vehicles and/or charging stations can be monitored remotely.

It is further envisaged that the conducting elements have a positioning mechanism such that they can be lowered to or moved away from a neutral position. This allows for lifting up or moving to the side of the conducting elements so that they do not present a hazard to tall vehicles in the roadway when the charger is not in use. Alternatively, if a vehicle has a low or high roofline, then the conducting elements may be lowered or raised so that there is good contact between the conducting elements and charge receiving members. In a further arrangement, the conducting elements may be held on a positioning mechanism that allows for the conducting elements to be swung over and away from the road in a substantially horizontal plane. Preferably, the positioning mechanism is formed of an articulating arm or arms that allow the conducting elements to be moved into several orientations. It is envisaged though that the conducting elements can be held in a fixed position, either because the positioning mechanism does not move or if it has a moveable mechanism, there is a locking mechanism to allow the position of the conducting elements to be fixed.

It is envisaged that a third conducting element can be provided, for example, for providing an earth or ground connection. Its longitudinal axis may be in axial aligment with the axes of the pair of conducting elements, or may be staggered. It may be insulated by a physical insulator or an air gap. It may be similarly supported on a movable arm, which may be movable with the tandem movement of the pair of conducting elements between first and second positions.

A charge receiving arrangement for a vehicle may be provided, said charge receiving arrangement comprising at least one pair of charge receiving members, each charge receiving member being connected to a support that can be attached to a vehicle, said pair of charge receiving members being positioned on the vehicle and arranged one behind the other along the longitudinal axis of the vehicle, such that in use, the charge receiving members and the conducting elements come into contact in line along the length of the vehicle.

Each charge receiving member may include an elongate contact element positioned substantially perpendicularly to the axis of the vehicle.

Preferably the support comprises separate support elements, each support element being attachable to an individual charge receiving member. This arrangement allows for the individual charge receiving elements to be positioned at any desired location on the vehicle.

It is envisaged however, that the support can be a single support that holds at least two charge receiving members at a defined distance from one another. It is desirable that the support element may include a distance adjuster such that the distance between the charge receiving members can be altered according to the length of the vehicle.

It is envisaged that the support is a retrofit support that can be attached to existing vehicles, for example onto the roof of the vehicle and the support can contain electrical controls and connectors that can attach to existing charging mechanisms in the vehicle.

Preferably, the charge receiving element comprises an arm that can be raised or lowered to come into contact with the conducting elements. The adjustment may be via an electric motor or pneumatic device.

It is envisaged that the charge receiving elements are associated with a control, such that if a fault in charge is detected in the supply to the energy storage device in the vehicle, flow of charge is switched off.. Having the ability to isolate flow in the vehicle circuit provides a safety feature that minimizes the risk of charge leakage or overheating in the circuit.

In a preferred arrangement each of the charge receiving elements is associated with a controller and switch which is operable so that the charge receiving elements can only carry current during charging.

Further, there is provided a control system whereby the connection of the charge receiving member and the conducting element can be monitored to ensure there is consistent flow of power from the supply to the vehicle.

A charging system for an electric vehicle may be provided, comprising a vehicle charging station as described above, and at least one pair of charge receiving members (14a, 15a) positionable on a vehicle along a longitudinal axis of the vehicle, the at least one pair of conducting elements (5, 6) and the at least one pair of charge receiving members (14a, 15a) being connected substantially in line with the longitudinal axis along the length of the vehicle.

The longitudinal axis of the vehicle may be defined as the axis of the vehicle when taken from the front (where the driver usually sits) to the rear of the vehicle.

The charging system may include a control arrangement that controls connection and disconnection of the conducting elements and the charge receiving elements and the flow of charge between a power supply and an energy storage device in the vehicle. It may also include a current monitor to measure and/or monitor the amount of current passing from the conducting elements to the charge receiving elements. A voltage monitor may also be included to measure/monitor the drop in voltage from the conducting elements to the charge receiving elements.

Furthermore, temperature monitors associated with the conducting elements and/or the receiving elements may be included to monitor and/or measure the amount of heat being generated at the junction between the conducting and receiving members.

A proximity sensor may also be included to detect the position of the vehicle relative to the conducting elements. The proximity sensor may be a pressure sensor or a light beam. It may also be an electromagnetic signal strength sensor. The electromagnetic signal strength detector may be in the form of a Bluetooth® wireless communication system using the Bluetooth® signal strength as the proximity sensor.

The invention is advantageous in that it provides a larger target area for contact between the charging elements and the charge receiving members. This allows a driver to approach a charging station so that when the vehicle moves into position the driver has some leeway in positioning the vehicle and there does not need to be precise alignment of charging elements and charge receiving members. The structural arrangement of longitudinally arranged conducting elements provides for a large target area along the vehicle and potentially the entire length of the vehicle (for example a bus) if the receiving elements are positioned at the front and rear of the vehicle. Similarly if the charge receiving members extend the entire width from one side to the other side of the vehicle, the stopping target area is large in that it is the entire width of the vehicle. Combined together this arrangement provides for a very large stopping area making it easier for the vehicle operator/driver to connect properly with the charging station.

### BRIEF DESCRIPTION OF THE DRAWINGS

For a better understanding of the present invention, and to show more clearly how it may be carried into effect, reference will now be made, by way of example, to the accompanying drawings, in which:
Figure 1 shows a side view of a bus being positioned in relation to the conducting elements of the invention;
Figure 2 shows a side view from the other side of a bus and the relationship between the conducting elements and the charge receiving members on the bus;
Figure 3 shows a perspective side view of a vehicle where the conducting elements are moved away from the vehicle; and
Figure 4 shows a schematic diagram of the power supply circuit of the invention.

### DESCRIPTION OF PREFERRED EMBODIMENTS

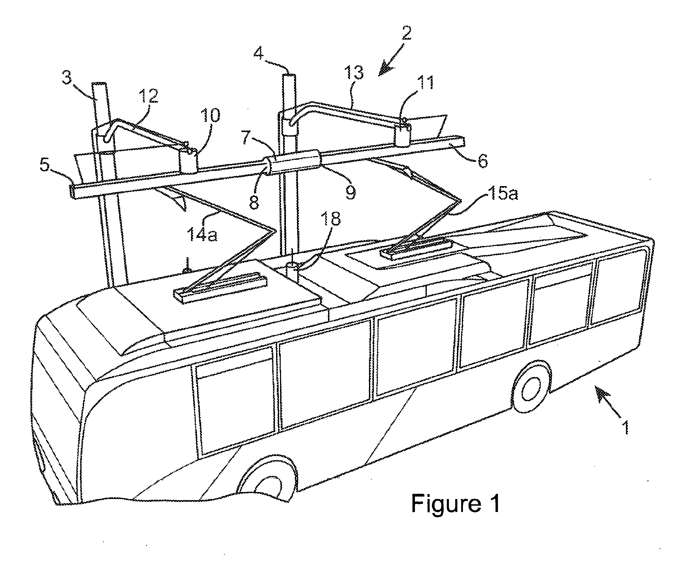

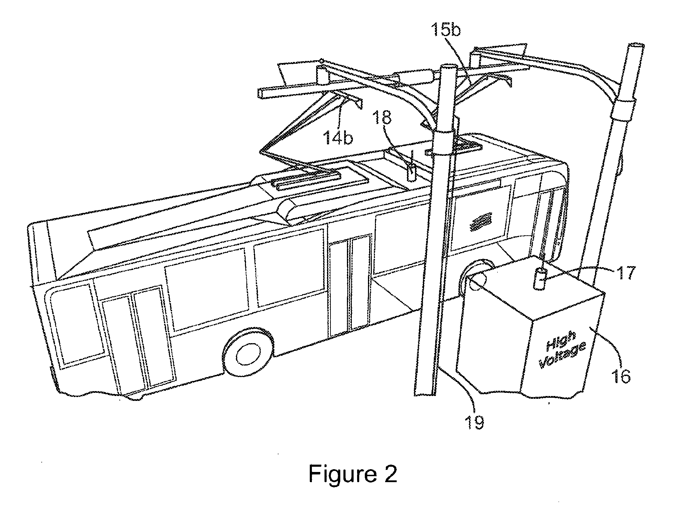

Referring firstly to Figure 1, a bus is indicated at 1. The bus has pulled up alongside a charging station generally shown as 2. The charging station comprises two upright supports 3 and 4, each of which holds a charging element 5 and 6, which are positioned such that when the bus is in position, the charging elements are positioned along the longitudinal axis of the bus above the roof-line of the bus. The charging elements are separated by an insulating element 7, which separates the ends 8 and 9 of respective charging elements. The charging elements 5 and 6 connected to the upright supports by arms 12, 13 at an angle to the supports and there are insulators 10, 11 between the elements 5, 6 and the arms. The charging elements sit above the bus and can be moved so they come into contact with charge receiving members 14a, 15a which are attached to the top of the bus. The charging elements can be swung out horizontally from the curb although they may be in a fixed position. The charge receiving members comprise an arm formed of one member at an angle to the other and these arms can be moved relative to the other so that the arms come into contact with charging elements. At the end of the charge receiving members there are contact elements, 14b and 15b (shown in Figure 2) that provide a surface at right angles to members 14a, 15a, and which contact with charging elements 5, 6 on their underside, again at right angles to the charging elements. The charge receiving element contact elements move vertically from a resting position close to the bus roof to a working position in contact with the charging elements.

Turning to Figure 2, the arms of the support for the charging elements are shown next to a high voltage supply 16. The voltage supply to the charging station has a main control 17. The charging main control communicates with a main control 18 on the vehicle and which is positioned on the roof of the bus between the supports for the first and second charge receiving members (also shown in Figure 1). Although the main control is shown as being between the supports, it may be positioned at any location on the vehicle. The main controls (preferably digital) 17, 18 are in wireless communication and are also in communication with sub controls which in turn communicate with sensors on the voltage supply, on the charging station and on the vehicle.

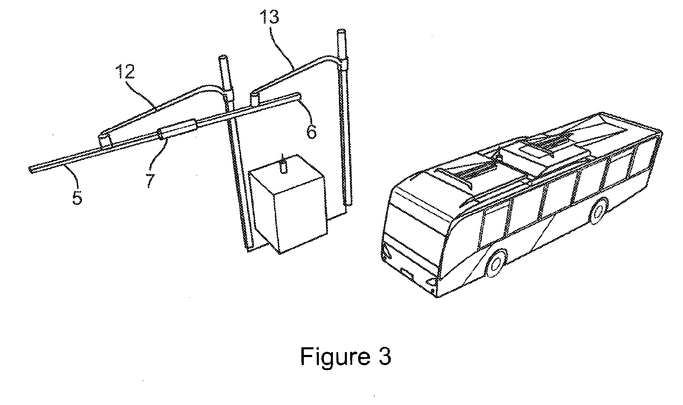

Figure 3 shows a side view of a vehicle where the arms 12, 13 are in the retracted position. Once the vehicle is in position the arms can be swung into a position where they can locate with charge receiving elements on the vehicle. The charging elements are isolated by insulating element 7.

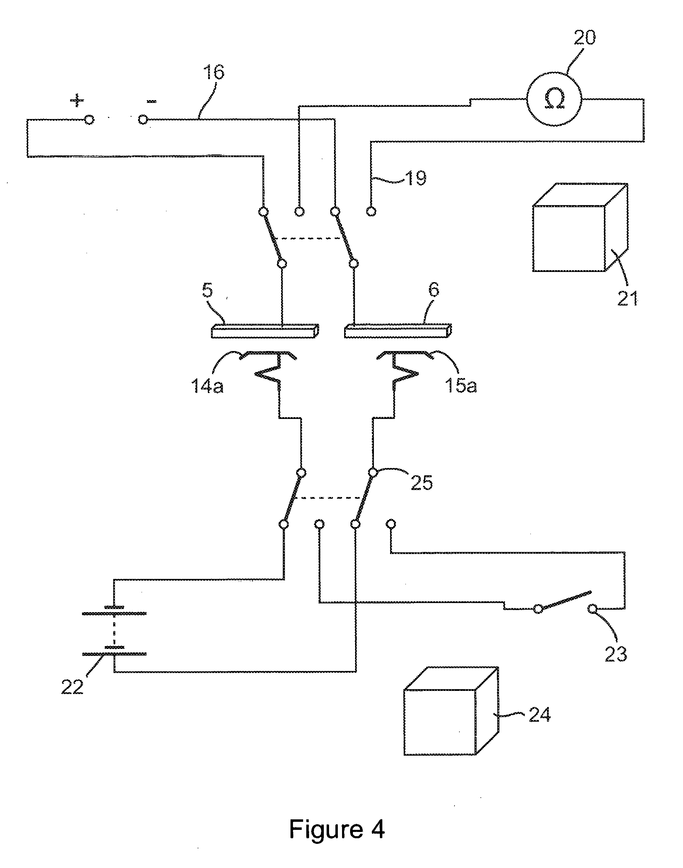

Figure 4 shows a schematic drawing of the power supplies associated with the charging station and the vehicle. There are power lines that lead from the main energy supply via high capacity switch 19 to the charging elements 5, 6. There is a sensor 20, which is used to test whether proper connection has been made between the charging elements 5, 6 and the charge receiving members 14a and 15a and this sensor acts as a safety feature in that if there is no proper connection, the charging sequence is halted. The flow of power from the energy supply 16 to the charging elements 5, 6 is controlled by control 17 (or in an alternative arrangement there may be a sub control element 21). The charging elements 5, 6 are connected by supply line via one or two switches 19 such as high capacity switches, to the two sides of the power source so that the charging elements can be de-energised if a fault such as a poor connection is detected. Additionally, the charging elements are de-energized by these switches when not in use for safety.

Similarly, there is a switch 25 associated with the power lines in the vehicle. There are power supply lines being on either side of the energy storage device 22 (such as a battery) in the vehicle. There is a control 24 associated with the vehicle and which controls switch 25 between the receiving members 14a and 15a and the battery 22 so that the receiving elements can be de-energised if a fault such as a poor connection is detected. Additionally, the receiving elements are de-energized by these switches when not in use for safety.

In operation, the driver drives the vehicle underneath the charging elements of the charging station and he or she can initiate the charging sequence either manually by pressing a switch, or the operation may start automatically, for example, by activation of the sequence using a proximity sensor associated with the main controls 17, 18 which detect when the vehicle is in a predefined position relative to the vehicle charging station. The proximity sensor may be a pressure sensor in the ground as the vehicle which senses the weight of the vehicle passing over it as it approaches the station. Alternatively, the sensor may be a light beam that is interrupted as the vehicle passes through the beam. Furthermore, the sensor may be an electromagnetic signal strength sensor. This may be in the form of a Bluetooth® wireless communication system using the Bluetooth® signal strength as the proximity sensor. In each operation, the main control 17 associated with the energy supply, which is for example a road side control arrangement starts a sequence of events that results in charging of the energy storage device of the vehicle right through to disconnection of the charging supply once the energy storage device on the vehicle is charged.

The connection sequence consist of firstly, the overhead conducting elements, which are movable, are sensed as being in a retracted position by signals from the main control 17, signals are sent by the main control 17 so that the retracted charging elements are moved into position above the vehicle. The charge receiving members on the roof of the vehicle, often referred to as pantographs, are commanded to move upwards, by a signal from the main control 17 to contact the conducting elements. Sensor 22 in combination with switch 23, detects whether there is correct contact between the charging elements and the charge receiving members/pantograph and if there is no correct contact, the process is terminated and the whole process is started again or an alarm is set off to alert the driver to reposition the bus. Essentially, when switch 23 is closed, there should be continuity in the circuit. When switch 23 is opened, there will be an open circuit. If both of these conditions are satisfied, this indicates a "correct" connection between the charging members and receiving members. Once there is contact, the test for contact (to make sure there is correct contact) is repeated and if there is correct contact, switch 25, which is associated with the charge receiving elements on the bus are activated to open an electrical contact with the energy receiving device/battery on the vehicle. The battery voltage is monitored by sensor 20 and if no battery voltage is sensed, the process is terminated and a fault signal is activated. However, if contact with the battery is confirmed, then switch 19 at the charging source is activated, so charging of the battery can begin.

When the charging process is complete, a signal is sent from a control associated with the vehicle, which is typically part of the vehicle's main digital controller to the charging station controller. The disconnection process is then controlled by the charging station. The process starts with switches 19 being operated to disconnect the conducting members from the charging source. A switch or switches 25 associated with the charge receiving elements on the vehicle is/are deactivated to isolate the vehicle from any power supply. Again, a voltage test for the battery is activated and if a voltage is detected, a fault signal is activated and an operator is alerted. The charge receiving members are then commanded to lower from the overhead conducting elements. If movable, the conducting elements are raised horizontally or vertically away from over-top of the vehicle and once this sequence of events is complete, a confirmation signal is sent to the vehicle. The signal can be sent to the vehicle's engine management system and if a signal is received confirming that the process has been successfully completed the management system can be activated so that the engine will start and the vehicle can be driven away.

Although the invention is discussed in relation to land vehicles, it may be used with other types of vehicles such as boats, airplanes or even trains.

Variations and modifications are possible within the scope of the appended claims.

## Claims

1. A vehicle charging station (2) comprising at least one pair of conducting elements (5, 6) for connecting with a pair of charge receiving members (14a, 15a) on a vehicle, the elements of the pair being insulated from one another, support means (3, 4) for said conducting elements (5, 6) which holds said conducting elements (5, 6) in position relative to a vehicle which is to receive a charge, in use, the conducting elements (5, 6) being substantially in line with the longitudinal axis of the vehicle, when the vehicle is in a charging position relative to the support (3, 4), ***characterized in that*** the conducting elements (5, 6) of the at least one pair are arranged with their longitudinal axes in axial alignment one behind the other.

2. A vehicle charging station (2) according to claim 1, in which each element of the pair of conducting elements (5, 6) is held on a separate support means (3, 4).

3. A vehicle charging station (2) according to claim 1, in which the support means (3, 4) includes a first arm (12) and a second arm (13) for holding the or each pair of conducting elements (5, 6).

4. A vehicle charging station (2) according to claim 3, in which the first and second arms (12, 13) are movable.

5. A vehicle charging station (2) according to claim 4, in which the first and second arms (12, 13) are movable in tandem in a substantially horizontal plane, for moving the conducting elements (5, 6) between a first position substantially adjacent to the support means and a second position substantially spaced to one side of the support means (3, 4).

6. A vehicle charging station (2) according to claim 4, in which the first and second arms (12, 13) are lowered or raised from a neutral position.

7. A vehicle charging station (2) according to any preceding claim, in which each of the conducting elements (5, 6) is associated with a switch mechanism (19) so that the conducting elements (5, 6) can only carry current during charging.

8. A vehicle charging station (2) according to any preceding claim, in which one or both of the conducting elements (5, 6) of the pair of conducting elements includes a sensor (20) to test the contact between the conducting elements (5, 6) and the charge receiving members (14a, 15a) on the vehicle.

9. A vehicle charging station (2) according to any preceding claim, the vehicle charging station (2) further comprising a charge receiving arrangement for a vehicle, said charge receiving arrangement comprising at least one pair of charge receiving members (14a, 15a), each charge receiving member being connected to a support that can be attached to a vehicle, said pair of charge receiving members (14a, 15a) being positioned on the vehicle and arranged one behind the other along the longitudinal axis of the vehicle, such that in use, the charge receiving members (14a, 15a) and at least one pair of conducting elements (5, 6) come into contact in line along the length of the vehicle.

10. A vehicle charging station (2) according to claim 9, in which each charge receiving member (14a, 15a) includes an elongate contact element (14b, 15b) positioned substantially perpendicularly to the axis of the vehicle.

11. A vehicle charging station (2) according to claim 10, in which the contact element (14b, 15b) of the charge receiving member (14a, 15a) includes an arm that can be moved to come into contact with the conducting elements (5, 6) that provide a charge to an energy storage device (22) on the vehicle.

12. A vehicle charging station (2) according to any of claims 9 to 11, in which at least one of the charge receiving members (14a, 15a) is associated with a switch (25), such that when there is no charging, there is no charge received by the charge receiving members (14a, 15a).

13. A charging system for an electric vehicle comprising a vehicle charging station as claimed in any of the preceding claims, and at least one pair of charge receiving members (14a, 15a) positionable on a vehicle along a longitudinal axis of the vehicle, the at least one pair of conducting elements (5, 6) and the at least one pair of charge receiving members (14a, 15a) being connected substantially in line with the longitudinal axis along the length of the vehicle.

14. A charging system according to claim 13, including a control arrangement that controls connection and disconnection of the conducting elements (5, 6) and the charge receiving members (14a, 15a) and the flow of charge between a power supply and an energy storage device (22) in the vehicle.

15. A charging system according to claim 13 including a proximity sensor, the proximity sensor detecting position of the vehicle relative to the conducting elements (5, 6).

## Patentansprüche

1. Fahrzeugladestation (2), umfassend zumindest ein Paar von leitenden Elementen (5, 6) zur Verbindung mit einem Paar von Ladungsaufnahmeelementen (14a, 15a) auf einem Fahrzeug, wobei die Elemente des Paares in Bezug aufeinander isoliert sind, Tragelemente (3, 4) für die leitenden Elemente (5, 6), die leitenden Elemente (5, 6) in Bezug auf ein Fahrzeug, das eine Ladung erhalten soll, in Verwendung in Position halten, wobei die leitenden Elemente (5, 6) im Wesentlichen in einer Linie mit der Längsachse des Fahrzeugs ausgerichtet sind, wenn sich das Fahrzeug in Bezug auf den Träger (3, 4) in einer Ladeposition befindet, ***dadurch gekennzeichnet, dass*** die leitenden Elemente (5, 6) des zumindest einen Paares mit ihren Längsachsen in axialer Ausrichtung eines hinter dem anderen angeordnet sind.

2. Fahrzeugladestation (2) nach Anspruch 1, wobei jedes Element des Paares von leitenden Elementen (5, 6) auf einem separaten Tragmittel (3, 4) gehalten wird.

3. Fahrzeugladestation (2) nach Anspruch 1, wobei das Tragmittel (3, 4) einen ersten Arm (12) und einen zweiten Arm (13) zum Halten des oder jedes Paares von leitenden Elementen (5, 6) enthält.

4. Fahrzeugladestation (2) nach Anspruch 3, wobei der erste und der zweite Arm (12, 13) beweglich sind.

5. Fahrzeugladestation (2) nach Anspruch 4, wobei der erste und der zweite Arm (12, 13) gemeinsam in einer im Wesentlichen horizontalen Ebene beweglich sind, um die leitenden Elemente (5, 6) zwischen einer ersten Position im Wesentlichen benachbart dem Tragmittel und einer zweiten Position im Wesentlichen zu einer Seite des Tragmittels (3, 4) beabstandet zu bewegen.

6. Fahrzeugladestation (2) nach Anspruch 4, wobei der erste und der zweite Arm (12, 13) von einer neutralen Position gesenkt oder gehoben werden.

7. Fahrzeugladestation (2) nach einem vorstehenden Anspruch, wobei jedes der leitenden Elemente (5, 6) mit einem Schaltmechanismus (19) verbunden sind, so dass die leitenden Elemente (5, 6) nur während des Ladens Strom führen können.

8. Fahrzeugladestation (2) nach einem der vorstehenden Ansprüche, wobei eines oder beide der leitenden Elemente (5, 6) des Paares von leitenden Elementen einen Sensor (20) enthalten, um den Kontakt zwischen den leitenden Elementen (5, 6) und den Ladungsaufnahmeelementen (14a, 15a) auf dem Fahrzeug zu testen.

9. Fahrzeugladestation (2) nach einem vorstehenden Anspruch, wobei die Fahrzeugladestation (2) darüber hinaus eine Ladungsaufnahmeanordnung für ein Fahrzeug umfasst, wobei die Ladungsaufnahmeanordnung zumindest ein Paar von Ladungsaufnahmeelementen (14a, 15a) umfasst, wobei jedes Ladungsaufnahmeelement mit einem Träger verbunden ist, der an einem Fahrzeug befestigt werden kann, wobei das Paar von Ladungsaufnahmeelementen (14a, 15a) auf dem Fahrzeug positioniert und eines hinter dem anderen entlang der Längsachse des Fahrzeugs angeordnet ist, so dass in Verwendung die Ladungsaufnahmeelemente (14a, 15a) und zumindest ein Paar von leitenden Elementen (5, 6) in einer Linie entlang der Länge des Fahrzeugs in Kontakt gelangen.

10. Fahrzeugladestation (2) nach Anspruch 9, wobei jedes Ladungsaufnahmeelement (14a, 15a) ein längliches Kontaktelement (14b, 15b) enthält, das im Wesentlichen normal zur Achse des Fahrzeugs positioniert ist.

11. Fahrzeugladestation (2) nach Anspruch 10, wobei das Kontaktelement (14b, 15b) des Ladungsaufnahmeelements (14a, 15a) einen Arm enthält, der bewegt werden kann, um mit den leitenden Elementen (5, 6) in Kontakt zu gelangen, die eine Ladung an eine Energiespeichereinrichtung (22) am Fahrzeug bereitstellen.

12. Fahrzeugladestation (2) nach einem der Ansprüche 9 bis 11, wobei zumindest eines der Ladungsaufnahmeelemente (14a, 15a) mit einem Schalter (25) verbunden ist, so dass, wenn keine Ladung erfolgt, von den Ladungsaufnahmeelementen (14a, 15a) keine Ladung aufgenommen wird.

13. Ladesystem für ein elektrisches Fahrzeug, das eine Fahrzeugladestation nach einem der vorstehenden Ansprüche und zumindest ein Paar von Ladungsaufnahmeelementen (14a, 15b) umfasst, auf einem Fahrzeug entlang einer Längsachse des Fahrzeugs positionierbar, wobei das zumindest eine Paar von leitenden Elementen (5, 6) und das zumindest eine Paar von Ladungsaufnahmeelementen (14a, 15a) im Wesentlichen in einer Linie mit der Längsachse entlang der Länge des Fahrzeugs verbunden sind.

14. Ladesystem nach Anspruch 13, das eine Steueranordnung enthält, die das Verbinden und Trennen der leitenden Elemente (5, 6) und der Ladungsaufnahmeelemente (14a, 15a) und den Ladungsfluss zwischen einer Energieversorgung und einer Energiespeichereinrichtung (22) im Fahrzeug steuert.

15. Ladesystem nach Anspruch 13, das einen Proximitätssensor enthält, wobei der Proximitätssensor eine Position des Fahrzeugs in Bezug auf die leitenden Elemente (5, 6) erkennt.

## Revendications

1. Station de charge de véhicule (2) comprenant au moins une paire d'éléments conducteurs (5, 6) pour une connexion à une paire d'éléments de réception de charge (14a, 15a) sur un véhicule, les éléments de la paire étant isolés l'un de l'autre, un moyen de support (3, 4) pour lesdits éléments conducteurs (5, 6) qui maintient lesdits éléments conducteurs (5, 6) dans une position par rapport à un véhicule qui est destiné à recevoir une charge, en utilisation, les éléments conducteurs (5, 6) étant sensiblement alignés avec l'axe longitudinal du véhicule, lorsque le véhicule est dans une position de charge par rapport au support (3, 4), **caractérisée par le fait que** les éléments conducteurs (5, 6) de l'au moins une paire sont disposés avec leurs axes longitudinaux en alignement axial l'un derrière l'autre.

2. Station de charge de véhicule (2) selon la revendication 1, dans laquelle chaque élément de la paire d'éléments conducteurs (5, 6) est maintenu sur un moyen de support séparé (3, 4).

3. Station de charge de véhicule (2) selon la revendication 1, dans laquelle le moyen de support (3, 4) comprend un premier bras (12) et un second bras (13) pour maintenir la ou chaque paire d'éléments conducteurs (5, 6).

4. Station de charge de véhicule (2) selon la revendication 3, dans laquelle les premier et second bras (12, 13) sont déplaçables.

5. Station de charge de véhicule (2) selon la revendication 4, dans laquelle les premier et second bras (12, 13) sont déplaçables en tandem dans un plan sensiblement horizontal, pour déplacer les éléments conducteurs (5, 6) entre une première position sensiblement adjacente au moyen de support et une seconde position sensiblement espacée d'un côté du moyen de support (3, 4).

6. Station de charge de véhicule (2) selon la revendication 4, dans laquelle les premier et second bras (12, 13) sont abaissés ou élevés depuis une position neutre.

7. Station de charge de véhicule (2) selon l'une quelconque des revendications précédentes, dans laquelle chacun des éléments conducteurs (5, 6) est associé à un mécanisme de commutation (19) de telle sorte que les éléments conducteurs (5, 6) peuvent seulement transporter un courant durant une charge.

8. Station de charge de véhicule (2) selon l'une quelconque des revendications précédentes, dans laquelle un ou les deux éléments conducteurs (5, 6) de la paire d'éléments conducteurs comprennent un capteur (20) pour tester le contact entre les éléments conducteurs (5, 6) et les éléments de réception de charge (14a, 15a) sur le véhicule.

9. Station de charge de véhicule (2) selon l'une quelconque des revendications précédentes, la station de charge de véhicule (2) comprenant en outre un agencement de réception de charge pour un véhicule, ledit agencement de réception de charge comprenant au moins une paire d'éléments de réception de charge (14a, 15a), chaque élément de réception de charge étant connecté à un support qui peut être fixé à un véhicule, ladite paire d'éléments de réception de charge (14a, 15a) étant positionnés sur le véhicule et disposés l'un derrière l'autre le long de l'axe longitudinal du véhicule, de telle sorte qu'en utilisation, les éléments de réception de charge (14a, 15a) et au moins une paire d'éléments conducteurs (5, 6) viennent en contact alignés le long de la longueur du véhicule.

10. Station de charge de véhicule (2) selon la revendication 9, dans laquelle chaque élément de réception de charge (14a, 15a) comprend un élément de contact allongé (14b, 15b) positionné sensiblement perpendiculairement à l'axe du véhicule.

11. Station de charge de véhicule (2) selon la revendication 10, dans laquelle l'élément de contact (14b, 15b) de l'élément de réception de charge (14a, 15a) comprend un bras qui peut être déplacé pour venir en contact avec les éléments conducteurs (5, 6) qui fournissent une charge à un dispositif de stockage d'énergie (22) sur le véhicule.

12. Station de charge de véhicule (2) selon l'une quelconque des revendications 9 à 11, dans laquelle au moins l'un des éléments de réception de charge (14a, 15a) est associé à un commutateur (25), de telle sorte que lorsqu'il n'y a pas de chargement, il n'y a pas de charge reçue par les éléments de réception de charge (14a, 15a).

13. Système de charge pour un véhicule électrique comprenant une station de charge de véhicule selon l'une quelconque des revendications précédentes, et au moins une paire d'éléments de réception de charge (14a, 15a) pouvant être positionnés sur un véhicule le long d'un axe longitudinal du véhicule, l'au moins une paire d'éléments conducteurs (5, 6) et l'au moins une paire d'éléments de réception de charge (14a, 15a) étant connectées sensiblement alignés avec l'axe longitudinal le long de la longueur du véhicule.

14. Système de charge selon la revendication 13, comprenant un agencement de commande qui commande une connexion et une déconnexion des éléments conducteurs (5, 6) et des éléments de réception de charge (14a, 15a) et le flux de charge entre une alimentation électrique et un dispositif de stockage d'énergie (22) dans le véhicule.

15. Système de charge selon la revendication 13 comprenant un capteur de proximité, le capteur de proximité détectant la position du véhicule par rapport aux éléments conducteurs (5, 6).
